# EUROPEAN PATENT APPLICATION

(11) **EP 1 584 650 A1**
(43) Date of publication of application: **12.10.2005**
(21) Application number: 05251707.5
(22) Date of filing: 21.03.2005
(51) Int. Cl.: C08K 9/12, C08K 9/02

(54) **Master batch pellet, and thermoplastic resin composition containing the master batch**

(30) Priority: 23.03.2004 JP 2004085367; 08.06.2004 JP 2004169910
(71) Applicant: TODA KOGYO CORPORATION, Hiroshima-ken (JP)
(72) Inventor: Matsui, Toshiki, Hiroshima-shi Hiroshima-ken (JP); Fujii, Yasuhiko, Otake-shi Hiroshima-ken (JP); Okita, Tomoko, Hatsukaichi-shi Hiroshima-ken (JP); Ohsugi, Minoru, Hiroshima-shi Hiroshima-ken (JP); Jikuhara, Shigekazu, Hiroshima-shi Hiroshima-ken (JP)
(74) Representative: Woods, Geoffrey Corlett

(57) **Abstract**

A master batch pellet comprises a thermoplastic resin and from 2.0 to 60% by weight of a white combustion catalyst blended in the thermoplastic resin, the white combustion catalyst comprising composite particles comprising inorganic carrier particles which have an average particle diamter of from 0.1 to 1.0 µm, which are composed of at least one selected from aluminum oxide, silicon oxide, calcium carbonate and titanium oxide and on which are provided from 0.001 to 0.10% by weight of metallic Pd colloid particles having an average particle diameter of not more than 10 nm.

The master batch pellets are suitable for producing a thermoplastic resin composition exhibiting an excellent combustion-promoting effect, more specifically a thermoplastic resin composition which is completely combusted upon incineration and effectively inhibited from generating harmful organic substances.

## Description

### BACKGROUND OF THE INVENTION:

The present invention relates to a master batch pellet for production of a thermoplastic resin composition, and the thermoplastic resin composition produced using the master batch pellet. More particularly, the present invention relates to a master batch pellet used for producing a thermoplastic resin composition which is free from discoloration and exhibits an excellent combustion-promoting effect, namely a thermoplastic resin composition which can undergo promoted complete combustion upon incineration thereof and effectively prevented from generating harmful organic substances, and a thermoplastic resin composition using the master batch pellet.

In recent years, with the change in life style as well as the enhancement in life level and income level, a huge number of brand-new products have been marketed, and rich material civilization has now been established. As a result, a very large amount of ordinary wastes and industrial wastes are discharged from houses and factories, so that the treatment or disposal of these wastes causes a significant social problem.

In particular, synthetic resins are materials essentially required in modern society because of excellent mechanical and physical properties thereof as well as a good moldability, and a huge amount of synthetic resins are used in various application fields. As a result, a total amount of wastes derived from the synthetic resins sums to several millions tons per year. Therefore, the treatment or disposal of the synthetic resin wastes becomes more significant among various problems concerning the ordinary house wastes and industrial wastes. Also, since the synthetic resins are produced using petroleum as a raw material which is a very valuable source for mankind, it has been strongly demanded to establish techniques for recycling or reusing these wastes as an energy source after using.

On the other hand, as the method for treating ordinary wastes, there has been frequently adopted a method of burning wastes enclosed in a plastic refuse bag composed of a thermoplastic resin such as typically polyethylene resins, which contains various pigments, in an incineration furnace.

In recent years, it has been strongly demanded to enhance or improve qualities and properties of goods not only from the viewpoints of essential characteristics such as safety and functionality but also from visual, psychological and environmental viewpoints. These tendencies also become increased upon improvement in qualities and properties of shopping bags and refuse bags, and these goods have been strongly required to exhibit an excellent transparency and a low chroma.

Further, although plastic shopping bags, plastic refuse bags, etc., are disposed of after using, the following environmental problems are caused when these combustible wastes including plastic wastes are incinerated. That is, there are caused problems such as air pollution due to NOx generated during combustion of the wastes, lack of filled-up land for disposal of a large amount of residual ashes or cinders generated after the combustion, leakage of harmful components from the residual ashes in the filled-up land, and generation of harmful dioxins. Besides, in the case where the combustible wastes contain a large amount of plastic wastes or plastic refuse bags which produce large calorie upon combustion, an inside temperature of the incineration furnace is considerably raised upon the combustion, thereby causing problems such as damage or breakage of the incineration furnace.

Conventionally, there have been already practically used such plastic shopping bags or refuse bags made of a thermoplastic resin containing ferric oxide hydroxide particles having a major axis diameter of 0.02 to 2.0 µm or iron oxide particles having an average particle diameter of 0.03 to 1.0 µm in an amount of 0.1 to 20.0% by weight (Japanese Patent Nos. 2824203 and 2905693).

In addition, there is also known the thermoplastic resin composition for plastic shopping bags or refuse bags which is prepared by blending a combustion promoting agent composed of fine inorganic particles carrying 0.001 to 0.2% by weight of a platinum-series element thereon in a thermoplastic resin such that the concentration of the platinum-series element therein is in the range of 0.5 to 100 ppm (Japanese Patent Application Laid-Open (KOKAI) No. 2002-167516).

At present, it has been most strongly required to provide a thermoplastic resin composition which has not only a good strength and a less toxicity, but also is promoted in complete combustion upon incineration after using, thereby preventing generation of harmful substances, and exhibits an excellent transparency enough to be readily colored into a desired color tone. However, such a thermoplastic resin composition fully satisfying the above requirements has not been obtained until now.

Namely, in the methods described in Japanese Patent Nos. 2824203 and 2905693, although thermoplastic resins can be completely combusted even at a low temperature and a low oxygen concentration upon incineration by using a combustion-promoting effect of the specific iron oxide particles blended therein, the plastic bags inevitably suffer from reddish or yellowish discoloration peculiar to the iron oxide. Even though the amount of the iron oxide blended in the plastic bags is reduced to avoid the discoloration, it is impossible to obtain a colorless transparent plastic bag suitably used for packaging purposes, for example, packaging bags for food such as vegetables and meat, or clothes.

Also, the thermoplastic resin composition described in Japanese Patent Application Laid-Open (KOKAI) No. 2002-167516 exhibits a colorless transparency since fine white inorganic particles carrying a platinum-series element thereon are blended therein, and can undergo a promoted complete combustion upon incineration by a combustion-promoting effect of the fine white inorganic particles. However, the thermoplastic resin composition may fail to show a high effect of preventing generation of harmful organic compounds such as dioxins as well as a high combustion-promoting effect.

As a result of the present inventors' earnest studies for solving the above problems, it has been found that the thermoplastic resin composition containing a specific amount of a white combustion catalyst prepared by carrying metallic Pd colloid particles having a specific average particle diameter on the surface of respective inorganic carrier particles having a specific average particle diameter, can exhibit a high effect of inhibiting generation of harmful organic compounds such as dioxins or the like and a high combustion-promoting effect. The present invention has been attained on the basis of the above finding.

### SUMMARY OF THE INVENTION

An object of the present invention is to provide a master batch pellet for producing a thermoplastic resin composition which has not only essential characteristics such as safety or the like, but also is free from generation of harmful organic compounds owing to a promoted complete combustion upon incineration, and further exhibits an excellent transparency sufficient to be readily colored into a desired color tone, and a thermoplastic resin composition produced using the master batch pellet.

To accomplish the aim, in a first aspect of the present invention, there is provided a master batch pellet comprising a thermoplastic resin and 2.0 to 60% by weight of a white combustion catalyst blended in the thermoplastic resin, said white combustion catalyst comprising composite particles obtained by carrying 0.001 to 0.10% by weight of metallic Pd colloid particles having an average particle diameter of not more than 10 nm on the surface of respective inorganic carrier particles having an average particle diameter of 0.1 to 1.0 µm and composed of at least one selected from the group consisting of aluminum oxide, silicon oxide, calcium carbonate and titanium oxide.

In a second aspect of the present invention, there are provided a thermoplastic resin composition comprising a thermoplastic resin and 0.1 to 2.0% by weight of a white combustion catalyst blended in the thermoplastic resin, said white combustion catalyst comprising composite particles obtained by carrying 0.001 to 0.10% by weight of metallic Pd colloid particles having an average particle diameter of not more than 10 nm on the surface of respective inorganic carrier particles having an average particle diameter of 0.1 to 1.0 µm and composed of at least one selected from the group consisting of aluminum oxide, silicon oxide, calcium carbonate and titanium oxide.

### DETAILED DESCRIPTION OF THE INVENTION

The present invention is described in detail below.

First, the white combustion catalyst contained in the master batch pellet of the present invention is described.

The white combustion catalyst used in the present invention is in the form of composite particles obtained by carrying 0.001 to 0.1% by weight of metallic Pd colloid particles having an average particle diameter of not more than 10 nm on the surface of respective inorganic carrier particles having an average particle diameter of 0.1 to 1.0 µm and composed of at least one selected from the group consisting of aluminum oxide, silicon oxide, calcium carbonate and titanium oxide.

As the inorganic carrier particles, there may be used particles composed of at least one selected from the group consisting of α-type or γ-type aluminum oxide, silicon oxide, calcium carbonate and rutile-type or anatase-type titanium oxide, which are usually commercially available. Of these particles, preferred are α-type aluminum oxide particles which are thermally stable and cause no thermal deterioration of the thermoplastic resin even when heat-kneaded therewith.

The inorganic carrier particles used in the present invention have an average particle diameter of 0.1 to 1.0 µm, preferably 0.1 to 0.8 µm, more preferably 0.3 to 0.8 µm. When the average particle diameter of the inorganic carrier particles is more than 1.0 µm, the resultant thermoplastic resin composition tends to be deteriorated in transparency. When the average particle diameter of the inorganic carrier particles is less than 0.1 µm, it may be difficult to uniformly disperse the resultant white combustion catalyst in the thermoplastic resin.

The metallic Pd colloid particles used in the present invention which are carried on the surface of the inorganic carrier particles have an average particle diameter of not more than 10 nm, preferably not more than 9 nm, more preferably not more than 8 nm. The lower limit of the average particle diameter of the metallic Pd colloid particles is preferable is 1 nm. When the average particle diameter of the metallic Pd colloid particles is more than 10 nm, the metallic Pd as a catalyst component tends to have a small specific surface area, resulting in deteriorated combustion promoting effect.

The amount of the metallic Pd colloid particles carried on the surface of the inorganic carrier particles is 0.001 to 0.10% by weight, preferably 0.005 to 0.08% by weight, more preferably 0.01 to 0.08% by weight. When the amount of the metallic Pd colloid particles carried is less than 0.001% by weight, the combustion-promoting effect tends to be lowered. When the amount of the metallic Pd colloid particles carried is more than 0.10% by weight, there tend to arise problems including not only increase in production costs but also remarkable discoloration of the resultant master batch pellet or thermoplastic resin composition.

Next, the process for producing the white combustion catalyst is described.

As the method of carrying the metallic Pd colloid particles on the surface of the inorganic carrier particles, there may be used a method of mixing a metallic Pd hydrosol containing at least one compound selected from the group consisting of cationic surfactants, anionic surfactants, nonionic surfactants and water-soluble polymers, with a water suspension containing the inorganic carrier particles to electrically carry the metallic Pd colloid particles on the surface of the respective inorganic carrier particles, and then subjecting the resultant particles to filtration, washing with water and drying. The above method enables the metallic Pd colloid particles to be efficiently and firmly carried only on the surface of the inorganic carrier particles.

Meanwhile, in the case where aluminum oxide particles are used as the inorganic carrier particles, since the aluminum oxide particles have a positive charge in the water suspension, there may be used Pd hydrosol containing Pd colloid particles having a negative charge imparted by anionic surfactants, nonionic surfactants or water-soluble polymers.

On the other hand, in the case where silicon oxide particles, calcium carbonate particles or titanium oxide particles are used as the inorganic carrier particles, since these particles have a negative charge in the water suspension, there may be used Pd hydrosol containing Pd colloid particles having a positive charge imparted by cationic surfactants.

Meanwhile, the Pd hydrosol may be produced by adding a reducing agent such as hydrogenated sodium borate to an aqueous solution of a Pd compound such as palladium chloride and palladium nitrate in the presence of the surfactants or water-soluble polymers.

In the present invention, in order to promote the catalyst effect of Pd, various other catalyst components or co-catalyst components may be carried in combination with the Pd colloid particles on the inorganic carrier particles.

On the other hand, as the ordinary conventional methods of carrying the Pd particles on the inorganic carrier particles, there have been used an impregnation method, an ion-exchange method, etc. However, in these methods, since the inorganic carrier particles are treated with a solution containing a Pd element, dried and then heat-treated at a temperature of 400 to 800°C, the resultant Pd particles are transformed into an oxide (PdO) up to reaching an inside of the Pd particles. The thus obtained Pd particles exhibit a less effect of preventing generation of harmful organic compounds such as dioxins and a less combustion promoting effect as compared to the metallic Pd colloid particles obtained by the method of the present invention.

Next, the master batch pellet used for producing the thermoplastic resin composition according to the present invention is described.

As the thermoplastic resin contained in the master batch pellet of the present invention, there may be used any thermoplastic resins without particular limitations as long as the resins can be suitably molded by an ordinary extrusion-molding method. Examples of the suitable thermoplastic resins may include olefin-based resins such as polyethylene-based resins and polypropylene-based resins, polyamide resins such as nylon 6 and nylon 66, polyvinyl chloride resins or the like. Of these thermoplastic resins, especially preferred are polyethylene-based resins such as low-density polyethylene, high-density polyethylene and copolymers of ethylene with other polymerizable monomers such as (meth)acrylic esters and vinyl acetate, since these thermoplastic resins are readily available in a large amount and inexpensive.

The master batch pellet of the present invention has an average major axis diameter of usually 1 to 6 mm, preferably 2 to 5 mm, and an average minor axis diameter of usually 2 to 5 mm, preferably 2.5 to 4 mm. When the average major axis diameter of the master batch pellet is less than 1 mm, the workability upon production of the pellet tends to be deteriorated. When the average major axis diameter of the master batch pellet is more than 6 mm, the difference in size from diluting binder resin pellet, etc., tends to become large, so that it may be difficult to fully disperse the master batch pellet in the diluting binder resin pellet. The shape of the master batch pellet is not particularly limited, and may be, for example, an amorphous shape, a granular shape such as spherical shape, a cylindrical shape, a flake-like shape, etc.

Meanwhile, the thermoplastic resin used in the master batch pellet may be the same as or different from that contained in the aimed thermoplastic resin composition. When the thermoplastic resins used in the master batch pellet and the thermoplastic resin composition are different from each other, the respective thermoplastic resins used may be appropriately selected in the consideration of various properties determining a compatibility therebetween.

The content of the white combustion catalyst in the master batch pellet is usually in the range of 2.0 to 60% by weight, preferably 3.0 to 50% by weight, more preferably 4.0 to 50% by weight based on the weight of the master batch pellet. When the content of the white combustion catalyst is less than 2.0% by weight, the master batch pellet tends to be insufficient in melt viscosity upon kneading, so that it may be difficult to sufficiently disperse and mix the white combustion catalyst therein. When the content of the white combustion catalyst is more than 60% by weight, the amount of the thermoplastic resin contained in the master batch pellet tends to be insufficient, so that it may also be difficult to sufficiently disperse and mix the white combustion catalyst therein. Further, since the content of the fine white combustion catalyst particles in a film as a final product largely varies by a slight change in amount of the master batch pellet added thereto, it may be difficult to control the content of the white combustion catalyst in the film to a desired value. In addition, the use of such a large amount of the white combustion catalyst tends to cause severe mechanical abrasion.

The master batch pellet of the present invention may also contain various additives such as colorants, ultraviolet absorbers, antistatic agents and fillers.

The master batch pellet of the present invention may be produced by mixing thermoplastic resin pellets, etc., with the white combustion catalyst, if required, using a mixer such as a ribbon blender, a Nauter mixer, a Henschel mixer and a super mixer, kneading the resultant mixture using a known single-screw kneading extruder or twin-screw kneading extruder, molding the kneaded material, and then cutting the molded product into pellets, or by kneading the above mixture by a Banbury mixer, a pressure kneader, etc., and then subjecting the obtained kneaded material to pulverization, molding and then cutting.

Next, the thermoplastic resin composition of the present invention is described.

The thermoplastic resins usable in the thermoplastic resin composition of the present invention may be the same resins as used in the master batch pellet. Examples of the suitable thermoplastic resins may include olefin-based resins such as polyethylene-based resins and polypropylene-based resins, polyamide resins such as nylon 6 and nylon 66, polyvinyl chloride resins or the like. Of these thermoplastic resins, especially preferred are polyethylene-based resins such as low-density polyethylene, high-density polyethylene and copolymers of ethylene with other polymerizable monomers such as (meth)acrylic esters and vinyl acetate, since these resins are readily available in a large amount and inexpensive.

The content of the white combustion catalyst in the thermoplastic resin composition is usually in the range of 0.1 to 2.0% by weight, preferably 0.1 to 1.5% by weight, more preferably 0.3 to 1.5% by weight based on the weight of the thermoplastic resin. When the content of the white combustion catalyst is less than 0.1% by weight, the combustion promoting effect by the white combustion catalyst tends to be insufficient. When the content of the white combustion catalyst is more than 2.0% by weight, the combustion promoting effect corresponding to such a high concentration of the white combustion catalyst tends to be no longer expected, and, therefore, the use of such a large amount of the white combustion catalyst is unnecessary.

The content of the metallic Pd colloid particles carried on the inorganic carrier particles in the thermoplastic resin composition is usually in the range of 0.2 to 20 ppm, preferably 0.3 to 15 ppm, more preferably 0.4 to 10 ppm. When the content of the metallic Pd colloid particles is less than 0.2 ppm, the combustion promoting effect thereof tends to be considerably deteriorated. When the content of the metallic Pd colloid particles is more than 20 ppm, there tend to arise problems including not only high production costs but also remarkable discoloration of the resultant composition.

The thermoplastic resin composition may also contain various additives such as colorants, ultraviolet absorbers, antistatic agents and fillers. The thermoplastic resin composition may be formed into an optional shape such as a film shape, a plate-like shape, a bar-like shape, a block shape, a hollow shape, a spherical shape, etc., by an ordinary molding method such as an extrusion-molding method, an injection-molding method and a compression-molding method. In addition, the thermoplastic resin composition may also be spun into fibers. The color tone of the thermoplastic resin composition is colorless, white or milky white. Therefore, the thin film obtained from the thermoplastic resin composition can exhibit an excellent transparency. Further, when a suitable colorant is blended in the thermoplastic resin composition, the resultant thermoplastic resin composition can exhibit both a desired color tone with a good transparency.

As the method of blending the white combustion catalyst in the thermoplastic resin composition of the present invention, there may be used a method of blending the master batch pellet described above with a diluting thermoplastic resin. When the thermoplastic resin composition is prepared through the process using the master batch pellet, the white combustion catalyst can be uniformly dispersed in the composition. In addition, the white combustion catalyst may be blended in the thermoplastic resin composition by an ordinary method for blending inorganic particles in thermoplastic resins.

Since the white combustion catalyst blended in the thermoplastic resin composition of the present invention is obtained without heating at a high temperature, the Pd colloid particles tends to be hardly oxidized, and, therefore, can be kept in a metallic state.

On the other hand, in the case of the ordinary production methods such as an impregnation method and an ion-exchange method (for example, the method described in Japanese Patent Application Laid-Open (KOAKI) No. 2002-167516), since the inorganic particles are treated with a solution containing a Pd element, dried and then heat-treated at a temperature of 400 to 800°C, the resultant Pd particles tend to be transformed into an oxide (PdO) up to reaching an inside thereof.

In general, it is reported that Pd is oxidized into PdO, and PdO serves for oxidizing other substances by the action of oxygen contained therein. However, it is considered that Pd particles in the form of metallic Pd more readily activate oxygen adsorbed onto a surface thereof as compared to the PdO particles.

Usually, in the case where Pd is carried on the inorganic carrier particles by the conventional impregnation method, etc., Pd carried is penetrated up to an inside of the inorganic carrier particles.

On the other hand, in the white combustion catalyst of the present invention, since the Pd colloid particles are uniformly carried on the surface of the inorganic carrier particles owing to the production method thereof, substantially the whole amount of the Pd colloid particles can contribute to the catalyst effect, so that a high catalyst performance of the metallic Pd colloid can be fully exhibited. As a result, it is considered that the white combustion catalyst can exhibit a high effect of preventing generation of harmful organic compounds such as dioxins as well as a high combustion promoting effect. For example, in the present invention, the amount of dioxins generated from the thermoplastic resin composition is usually not more than 100 pg-TEQ/g-sample, preferably not more than 80 pg-TEQ/g-sample as measured and evaluated by the below-mentioned dioxin reduction test.

In a Pd colloid solution containing at least one compound selected from the group consisting of cationic surfactants, anionic surfactants, nonionic surfactants and water-soluble polymers, the metallic Pd colloid particles are firmly carried on the inorganic carrier particles while preventing agglomeration thereof, so that the resultant catalyst can exhibit a sufficient catalyst activity inherent to Pd. Further, since the surfactants or water-soluble polymers are adsorbed on the surface of the metallic Pd colloid particles, the white combustion catalyst containing such metallic Pd colloid particles can exhibit a good compatibility with the thermoplastic resins and, therefore, an excellent dispersibility therein.

In addition, the thermoplastic resin composition obtained by kneading the master batch pellet of the present invention with a diluting thermoplastic resin and then molding the kneaded material, allows the white combustion catalyst to be dispersed therein with a high uniformity. Therefore, the thermoplastic resin composition can be prevented from generating the harmful organic compounds owing to promoted complete combustion upon incineration thereof, and can exhibit an excellent transparency sufficient to be readily colored into a desired color tone.

The thermoplastic resin composition obtained using the master batch pellet according to the present invention can exhibit stable and excellent combustion properties as compared to thermoplastic resin compositions obtained by directly blending the white combustion catalyst in the thermoplastic resin. The reason why the stable and excellent combustion properties can be attained is considered as follows. That is, although the white combustion catalyst is difficult to disperse owing to fine particles, when the previously prepared master batch pellet and the diluting thermoplastic resin are kneaded with each other, it is possible to improve a dispersibility of the fine white combustion catalyst particles in the thermoplastic resin composition, thereby allowing the catalyst to fully exhibit its inherent oxidation activity.

The master batch pellet of the present invention enables to readily and uniformly disperse the white combustion catalyst in the thermoplastic resin composition and, therefore, is suitable as a master batch pellet for production of thermoplastic resin compositions.

The thermoplastic resin composition of the present invention has not only essential characteristics such as strength and safety but also can be prevented from generating harmful organic compounds owing to promoted complete combustion upon incineration thereof after using, and further can exhibit an excellent transparency sufficient to be readily colored into a desired color tone, and, therefore, can be suitably used in extensive applications including packaging of food such as vegetables and meats, or clothes.

### EXAMPLES

The present invention is described in more detail by Examples and Comparative Examples, but the Examples are only illustrative and, therefore, not intended to limit the scope of the present invention.

In the present invention, various properties were measured and evaluated by the following methods.
(1) The inorganic carrier particles and the Pd colloid particles carried on the inorganic carrier particles in the white combustion catalyst were identified using an X-ray diffractometer. The average particle diameter of the white combustion catalyst was expressed by the average value of diameters of 350 particles measured from a transmission electron micrograph thereof.
(2) The amount of Pd carried in the white combustion catalyst was measured as follows. That is, 1.00 g of the white combustion catalyst was dissolved under boiling in 30 mL of a solution prepared by diluting a mixed acid solution containing concentrated nitric acid and concentrated hydrochloric acid at a volume ratio of 1:3 with ion-exchanged water 2 times in volume. The resultant solution was further diluted with ion-exchanged water such that a total volume thereof was 100 mL. The obtained dilute solution was measured using a high-frequency inductively coupled plasma atomic emission spectroscopic apparatus "ICAP-575" manufactured by Japan Jarrel Ausch Co., Ltd.
(3) The content of the white combustion catalyst in the thermoplastic resin composition produced through the process using the master batch pellet was calculated from the difference in weight between before and after heat-treating 1.0 g of the thermoplastic resin composition placed in a porcelain crucible in air at 800°C for 1 hour. Meanwhile, when the white catalyst carrier underwent transformation upon the heat treatment, the content of the white combustion catalyst was calculated by taking into account the change in weight due to the transformation.
(4) Evaluation of combustion properties of thermoplastic resin composition:
   Into a quartz sampling tube having an inner diameter of 14 mmφ and a length of 65 mm was added 35 mg of a sample of the thermoplastic resin composition which was fixedly interposed between quartz wool pads from opposite sides thereof. While flowing an oxygen gas at a flow rate of 200 mL/min for 4 min, the sample was heat-treated at 700°C, and a whole amount of a combustion gas generated during the burning was collected in a 1 L Tedler bag to measure a composition and amount of the combustion gas. The composition of the combustion gas was evaluated by measuring the amounts of carbon monoxide, carbon dioxide and benzene by gas chromatography. The larger the amount of carbon dioxide produced and the smaller the amounts of carbon monoxide and benzene, the higher the degree of complete combustion.
(5) Evaluation of dioxin reduction test for thermoplastic resin composition:
   90% by weight of the thermoplastic resin composition and 10% by weight of a vinyl chloride resin were kneaded with each other at 170°C for 3 min, and then molded to form a 1 mm-thick sheet as a sample. A quartz boat (10 mm in width x 50 mm in length x 10 mm in height) accommodating 20 mg of one batch of the thus obtained sample was placed in a quartz tube having an inner diameter of 15 mmφ and a length of 300 mm which was heated to 700°C, to burn the sample while flowing air therethrough at a flow rate of 1.8 L/min.

The combustion gas produced during the burning was trapped with ion-exchanged water, diethylene glycol and Amberite XAD-2 produced by ORGANO Co., Ltd., from an upstream side of the gas in an ice bath. This procedure was repeated 70 times. After completion of the experiment, portions extending from an outlet of the quartz tube to a gas absorption unit were washed with ion-exchanged water, acetone and dichloromethane, and the washing solution was recovered as a sample to be analyzed. Further, the washing solution, the ion-exchanged water and the diethylene glycol solution were filtered and the obtained residue was subjected together with the XAD-2 resin to Soxhlet extraction. The resultant filtrate was mixed with toluene and then subjected to shake extraction.

The dioxins contained in the toluene absorbing solution were quantitatively determined using a gas chromatographic mass spectrometer "AUTOSPEC ULTIMA" manufactured by MICROMASS Co., Ltd.

### <Production of Pd colloid solution 1>

500 mL of a 0.10 mol/L palladium chloride aqueous solution and 500 mL of a 1 wt% polyvinyl alcohol aqueous solution were mixed with 18.5 L of ion-exchanged water under stirring. Then, 500 mL of a 0.4 mol/L hydrogenated sodium borate aqueous solution was added and mixed under stirring into the resultant mixed solution, thereby obtaining a black-colored 2.5 mmol/L Pd colloid solution 1 having a negative charge.

### <Production of Pd colloid solution 2>

500 mL of a 0.10 mol/L palladium chloride aqueous solution was mixed with 18.5 L of ion-exchanged water. Then, 500 mL of a 0.8 wt% stearyl trimethyl ammonium chloride aqueous solution and 500 mL of a 0.4 mol/L hydrogenated sodium borate aqueous solution were simultaneously added and mixed under stirring into the resultant mixed solution, thereby obtaining a black-colored 2.5 mmol/L Pd colloid solution 2 having a positive charge.

### Production Example 1: <White combustion catalyst 1>

15 L of the above prepared Pd colloid solution 1 was dropped and mixed under stirring in 20 kg of a water suspension containing 50% by weight of α-alumina carrier particles having an average particle diameter of 0.6 µm, thereby carrying the Pd colloid particles on the surface of the α-alumina carrier particles. Thereafter, the resultant suspension was filtered and washed with water, and then dried at 120°C for 8 hours. The resultant dried product was pulverized, thereby obtaining 10 kg of milky white-colored α-alumina particles carrying 0.04% by weight of the Pd colloid particles. It was confirmed that the Pd colloid particles carried on the α-alumina particles had an average particle diameter of 3 nm.

### Production Example 2: <White combustion catalyst 2>

15 L of the above prepared Pd colloid solution 2 was mixed under stirring in 10 kg of a water suspension containing 50% by weight of anatase-type titanium oxide carrier particles having an average particle diameter of 0.5 µm, thereby carrying the Pd colloid particles on the surface of the anatase-type titanium oxide carrier particles. Thereafter, the resultant suspension was filtered and washed with water, and then dried at 120°C for 8 hours. The resultant dried product was pulverized, thereby obtaining 5.0 kg of gray-colored titanium oxide carrier particles carrying 0.08% by weight of the Pd colloid particles. It was confirmed that the Pd colloid particles carried on the titanium oxide carrier particles had an average particle diameter of 6 nm.

### Production Example 3: <White combustion catalyst 3>

1.9 L of the above prepared Pd colloid solution 2 was dropped and mixed under stirring in 20 kg of a water suspension containing 50% by weight of calcium carbonate carrier particles having an average particle diameter of 0.6 µm, thereby carrying the Pd colloid particles on the surface of the calcium carbonate carrier particles. Thereafter, the resultant suspension was filtered and washed with water, and then dried at 120°C for 8 hours. The resultant dried product was pulverized, thereby obtaining 10 kg of milky white-colored calcium carbonate carrier particles carrying 0.005% by weight of the Pd colloid particles. It was confirmed that the Pd colloid particles carried on the calcium carbonate carrier particles had an average particle diameter of 3 nm.

### Production Example 4: <White combustion catalyst 4>

10 kg of α-alumina carrier particles having an average particle diameter of 0.6 µm were impregnated with 5.0 L of a 7.5 mmol/L dinitrodiammine palladium aqueous solution, and then dried at 120°C for 8 hours. Then, the resultant dried product was heat-treated at 500°C for 2 hours, and the heat-treated product was pulverized, thereby obtaining 10 kg of milky white-colored α-alumina carrier particles carrying 0.04% by weight of Pd. It was confirmed that the Pd particles carried on the α-alumina carrier particles had an average particle diameter of 10 nm.

### Production Example 5: <White combustion catalyst 5>

For the purpose of identifying the Pd colloid particles carried on the α-alumina particles using an X-ray diffractometer, the same procedure as defined in Production Example 1 was conducted except that the water suspension containing the α-alumina carrier particles as used in Production Example 1 was changed to 8 kg of the 1 wt% water suspension, thereby obtaining 80 g of gray-colored α-alumina particles carrying 5.0% by weight of the Pd colloid particles. As a result of analyzing the thus obtained particles using the X-ray diffractometer, it was confirmed that the peak attributed to (111) crystal plane of metallic Pd was observed, but no peak attributed to the crystal plane of PdO was observed.

### Production Example 6: <White combustion catalyst 6>

For the purpose of identifying the Pd particles carried on the α-alumina particles using an X-ray diffractometer, the same procedure as defined in Production Example 4 was conducted except that the amount of the α-alumina particles as used in Production Example 4 was changed to 1 kg, and 500 mL of a 0.19 mol/L dinitrodiammine palladium aqueous solution was used, thereby obtaining 1.0 kg of gray-colored α-alumina particles carrying 1.0% by weight of the Pd particles. As a result of analyzing the thus obtained Pd colloid particles carried on the α-alumina particles using the X-ray diffractometer, it was confirmed that the peak attributed to (101) crystal plane of PdO was observed, but no peak attributed to the crystal plane of metallic Pd was observed.

### Example 1: <Master batch pellet A for production of thermoplastic resin composition>

85% by weight of low-density polyethylene resin pellets and 15% by weight of the white combustion catalyst produced in Production Example 1 were kneaded together at 160°C using a twin-screw kneader, extruded and then cut, thereby obtaining a master batch pellet A having a cylindrical shape (3 mmφ x 3 mm).

### Example 2: <Master batch pellet B for production of thermoplastic resin composition>

95% by weight of low-density polyethylene resin pellets and 5% by weight of the white combustion catalyst produced in Production Example 2 were kneaded together at 160°C using a twin-screw kneader, extruded and then cut, thereby obtaining a master batch pellet B having a cylindrical shape (3 mmφ × 3 mm) .

### Example 3: <Master batch pellet C for production of thermoplastic resin composition>

50% by weight of low-density polyethylene resin pellets and 50% by weight of the white combustion catalyst produced in Production Example 3 were kneaded together at 160°C using a twin-screw kneader, extruded and then cut, thereby obtaining a master batch pellet C having a cylindrical shape (3 mmφ x 3 mm).

### Comparative Example 1: <Master batch pellet D for production of thermoplastic resin composition>

85% by weight of low-density polyethylene resin pellets and 15% by weight of the white combustion catalyst produced in Production Example 4 were kneaded together at 160°C using a twin-screw kneader, extruded and then cut, thereby obtaining a master batch pellet D having a cylindrical shape (3 mmφ x 3 mm).

### <Evaluation of combustion properties of thermoplastic resin composition>

### Example 4:

99.5% by weight of low-density polyethylene pellets and 0.5% by weight of the white combustion catalyst produced in Production Example 1 were kneaded together under heating at 180°C, and then molded by an inflation extrusion-molding method, thereby producing a 50 µm-thick film (thermoplastic resin composition 1). It was confirmed that the color tone of the thus obtained film was colorless transparent (Pd content: 2 ppm).

The obtained film was subjected to combustion gas measurement according to the above "Evaluation of combustion properties of thermoplastic resin composition". As a result, it was confirmed that the amounts of carbon dioxide, carbon monoxide and benzene produced were 86.2%, 4.5% and 0.7% (calculated as carbons of polyethylene), respectively.

### Example 5:

99.0% by weight of low-density polyethylene pellets and 1.0% by weight of the white combustion catalyst produced in Production Example 2 were kneaded together under heating at 180°C, and then molded by an inflation extrusion-molding method, thereby producing a 50 µm-thick film (thermoplastic resin composition 2). It was confirmed that the color tone of the thus obtained film was colorless transparent (Pd content: 8 ppm).

The obtained film was subjected to combustion gas measurement according to the above "Evaluation of combustion properties of thermoplastic resin composition". As a result, it was confirmed that the amounts of carbon dioxide, carbon monoxide and benzene produced were 93.4%, 1.5% and 0.05% (calculated as carbons of polyethylene), respectively.

### Example 6:

99.0% by weight of low-density polyethylene pellets and 1.0% by weight of the white combustion catalyst produced in Production Example 3 were kneaded together under heating at 180°C, and then molded by an inflation extrusion-molding method, thereby producing a 50 µm-thick film (thermoplastic resin composition 3). It was confirmed that the color tone of the thus obtained film was colorless transparent (Pd content: 0.5 ppm).

The obtained film was subjected to combustion gas measurement according to the above "Evaluation of combustion properties of thermoplastic resin composition". As a result, it was confirmed that the amounts of carbon dioxide, carbon monoxide and benzene produced were 80.2%, 5.1% and 0.9% (calculated as carbons of polyethylene), respectively, and the complete combustion of the thermoplastic resin composition was promoted even when the amount of Pd carried was small.

### Example 7:

96.7% by weight of low-density polyethylene resin pellets and 3.3% by weight of the master batch pellet A obtained in Example 1 were kneaded together under heating at 180°C using a ribbon blender, and then molded by an inflation extrusion-molding method, thereby producing a 50 µm-thick film (thermoplastic resin composition 4). It was confirmed that the color tone of the thus obtained film was colorless transparent (white combustion catalyst content: 0.50% by weight; Pd content: 2 ppm).

The obtained film was subjected to combustion gas measurement according to the above "Evaluation of combustion properties of thermoplastic resin composition". As a result, it was confirmed that the average amounts of carbon dioxide, carbon monoxide and benzene produced were 89.2%, 4.3% and 0.6% (calculated as carbons of polyethylene), respectively.

### Example 8:

80.0% by weight of low-density polyethylene resin pellets and 20.0% by weight of the master batch pellet B obtained in Example 2 were kneaded together under heating at 180°C using a ribbon blender, and then molded by an inflation extrusion-molding method, thereby producing a 50 µm-thick film (thermoplastic resin composition 5). It was confirmed that the color tone of the thus obtained film was colorless transparent (white combustion catalyst content: 1.0% by weight; Pd content: 8 ppm).

The obtained film was subjected to combustion gas measurement according to the above "Evaluation of combustion properties of thermoplastic resin composition". As a result, it was confirmed that the average amounts of carbon dioxide, carbon monoxide and benzene produced were 96.0%, 1.4% and 0.05% (calculated as carbons of polyethylene), respectively.

### Example 9:

98.0% by weight of low-density polyethylene pellets and 2.0% by weight of the master batch pellet C obtained in Example 3 were kneaded together under heating at 180°C, and then molded by an inflation extrusion-molding method, thereby producing a 50 µm-thick film (thermoplastic resin composition 6). It was confirmed that the color tone of the thus obtained film was colorless transparent (white combustion catalyst content: 1.0% by weight; Pd content: 0.5 ppm).

The obtained film was subjected to combustion gas measurement according to the above "Evaluation of combustion properties of thermoplastic resin composition". As a result, it was confirmed that the average amounts of carbon dioxide, carbon monoxide and benzene produced were 79.0%, 4.9% and 0.8% (calculated as carbons of polyethylene), respectively.

### Comparative Example 2:

99.5% by weight of low-density polyethylene pellets and 0.5% by weight of the white combustion catalyst produced in Production Example 4 were kneaded together under heating at 180°C, and then molded by an inflation extrusion-molding method, thereby producing a 50 µm-thick film (thermoplastic resin composition 7). It was confirmed that the color tone of the thus obtained film was colorless transparent (Pd content: 2 ppm).

The obtained film was subjected to combustion gas measurement according to the above "Evaluation of combustion properties of thermoplastic resin composition". As a result, it was confirmed that the amounts of carbon dioxide, carbon monoxide and benzene produced were 78.4%, 5.2% and 1.0% (calculated as carbons of polyethylene), respectively.

### Comparative Example 3:

Low-density polyethylene pellets solely were kneaded together under heating at 180°C, and then molded by an inflation extrusion-molding method, thereby producing a 50 µm-thick film (thermoplastic resin composition 8). It was confirmed that the color tone of the thus obtained film was colorless transparent.

The obtained film was subjected to combustion gas measurement according to the above "Evaluation of combustion properties of thermoplastic resin composition". As a result, it was confirmed that the amounts of carbon dioxide, carbon monoxide and benzene produced were 72.9%, 7.8% and 1.7% (calculated as carbons of polyethylene), respectively.

### Comparative Example 4:

96.7% by weight of low-density polyethylene resin pellets and 3.3% by weight of the master batch pellet D obtained in Comparative Example 1 were kneaded together under heating at 180°C using a ribbon blender, and then molded by an inflation extrusion-molding method, thereby producing a 50 µm-thick film (thermoplastic resin composition 9). It was confirmed that the color tone of the thus obtained film was colorless transparent (white combustion catalyst content: 0.50% by weight; Pd content: 2 ppm).

The obtained film was subjected to combustion gas measurement according to the above "Evaluation of combustion properties of thermoplastic resin composition". As a result, it was confirmed that the average amounts of carbon dioxide, carbon monoxide and benzene produced were 80.6%, 5.1% and 0.9% (calculated as carbons of polyethylene), respectively.

### <Evaluation of dioxin reduction test for thermoplastic resin composition>

### Example 10:

Using the thermoplastic resin composition 1 obtained in Example 4, the content of dioxins in the thermoplastic resin composition was measured according to the above "Evaluation of dioxin reduction test for thermoplastic resin composition". As a result, it was confirmed that the amount of dioxins produced was 70 pg-TEQ/g-sample.

### Example 11:

Using the thermoplastic resin composition 4 obtained in Example 7, the content of dioxins in the thermoplastic resin composition was measured according to the above "Evaluation of dioxin reduction test for thermoplastic resin composition". As a result, it was confirmed that the amount of dioxins produced was 60 pg-TEQ/g-sample.

### Comparative Example 5:

Using the thermoplastic resin composition 7 obtained in Comparative Example 2, the content of dioxins in the thermoplastic resin composition was measured according to the above "Evaluation of dioxin reduction test for thermoplastic resin composition". As a result, it was confirmed that the amount of dioxins produced was 250 pg-TEQ/g-sample.

### Comparative Example 6:

Using the thermoplastic resin composition 8 obtained in Comparative Example 3, the content of dioxins in the thermoplastic resin composition was measured according to the above "Evaluation of dioxin reduction test for thermoplastic resin composition". As a result, it was confirmed that the amount of dioxins produced was 700 pg-TEQ/g-sample.

### Comparative Example 7:

Using the thermoplastic resin composition 9 obtained in Comparative Example 4, the content of dioxins in the thermoplastic resin composition was measured according to the above "Evaluation of dioxin reduction test for thermoplastic resin composition". As a result, it was confirmed that the amount of dioxins produced was 230 pg-TEQ/g-sample.

## Claims

1. A master batch pellet comprising a thermoplastic resin and from 2.0 to 60% by weight of a white combustion catalyst blended in the thermoplastic resin;
said white combustion catalyst comprising composite particles comprising inorganic carrier particles which have an average particle diameter of from 0.1 to 1.0 µm, which are composed of at least one selected from aluminum oxide, silicon oxide, calcium carbonate and titanium oxide and on the surface of which are provided from 0.001 to 0.10% by weight of metallic Pd colloid particles having an average particle diameter of not more than 10 nm.

2. A master batch pellet according to claim 1, wherein said metallic Pd colloid particles of said white combustion catalyst have an average particle diameter of from 1 to 9 nm.

3. A master batch pellet according to claim 1 or 2, wherein said inorganic carrier particles of said white combustion catalyst are composed of aluminum oxide.

4. A master batch pellet according to any one of the preceding claims, wherein said white combustion catalyst is in the form of composite particles obtained by contacting and mixing a metallic Pd hydrosol containing at least one compound selected from cationic surfactants, anionic surfactants, nonionic surfactants and water-soluble polymers with a water suspension containing the inorganic carrier particles to electrically carry the metallic Pd colloid particles on the surface of the respective inorganic carrier particles.

5. A master batch pellet according to any one of the preceding claims, wherein said thermoplastic resin is selected from low-density polyethylene, high-density polyethylene, copolymers of ethylene and a (meth)acrylic ester and copolymers of ethylene and vinyl acetate.

6. A thermoplastic resin composition comprising a thermoplastic resin and from 0.1 to 2.0% by weight of a white combustion catalyst as defined in any one of claims 1 to 4 blended in the thermoplastic resin.

7. A thermoplastic resin composition according to claim 6, wherein the content of said metallic Pd colloid particles in the thermoplastic resin composition is in the range of from 0.2 to 20 ppm.

8. A thermoplastic resin composition according to claim 6 or 7, wherein said thermoplastic resin is selected from low-density polyethylene, high-density polyethylene, copolymers of ethylene and a (meth)acrylic ester and copolymers of ethylene and vinyl acetate.

9. A process for the preparation of a thermoplastic resin composition as defined in claim 6, which process comprises:
(a) blending master batch pellets as defined in any one of claims 1 to 4 with a thermoplastic resin; or
(b) blending said white combustion catalyst with a thermoplastic resin.

10. Molded articles, fibers or films produced from a thermoplastic resin composition as defined in any one of claims 6 to 8.
